# EUROPEAN PATENT APPLICATION

(11) **EP 2 719 735 A1**
(43) Date of publication of application: **16.04.2014**
(21) Application number: 12188427.4
(22) Date of filing: 12.10.2012
(51) Int. Cl.: C09J 131/02, C09J 133/00

(54) **Adhesive compositions**

(71) Applicant: Celanese Emulsions GmbH, 65843 Sulzbach (Taunus) (DE)
(72) Inventor: Roth, Meike, 55299 Nackenheim (DE); Faust, Hans Uwe, 65835 Liederbach am Taunus (DE); Manneschmidt, Ronè, 35789 Weilmunster (DE); Steube, Renate, 65468 Trebur (DE); Dyhr, Sven, 60594 Frankfurt am Main (DE)
(74) Representative: Serravalle, Marco

(57) **Abstract**

An adhesive composition comprises an aqueous dispersion of a polymer comprising at least one vinyl ester of a carboxylic acid having up to 20 carbon atoms; and a plasticizer comprising an ester of a polyol and a linear or branched aliphatic monocarboxylic acid having 3 to 20 carbon atoms in the molecule.

## Description

### FIELD

This invention relates to adhesive compositions particularly, but not exclusively, intended for use in packaging applications.

### BACKGROUND

Aqueous dispersions containing vinyl ester polymers have widespread applications in the area of adhesives and coatings. For example, stabilized aqueous polymer dispersions containing vinyl acetate polymers have applications as adhesives for paper packaging and converting, woodwork, vinyl laminating, woven and non-woven fabrics, films, metallic foils and metallized films, and flexible cellular material such as polyurethane foams or sponge rubber. The adhesives are often prepared with polymers synthesized using emulsion polymerization. On evaporation or removal of the aqueous medium, the compositions cure or harden at room temperature to form a film which is desirably characterized by high strength and resistance to heat, and humidity. Some examples of vinyl acetate polymer aqueous emulsion compositions can be found in U.S. Pat. Nos. 5,571,860, 6,803,403 and 6,762,239.

Additives such as plasticizers are useful with vinyl ester polymer adhesive compositions, for example to provide lower glass transition temperatures, lower minimum film forming temperatures, and higher viscosities. Typical plasticizers employed in packaging applications include benzoate esters, such as Benzoflex™ 2088, a blend of diethylene glycol dibenzoate, dipropylene glycol dibenzoate and triethylene glycol dibenzoate. To achieve the right balance of flexibility, bond strength, and minimum film formation temperature required for use in packaging adhesives, these plasticizers are generally present in concentrations of at least 10 % by weight of vinyl ester polymer. However, particularly when used at such high levels, benzoate plasticizers increase the migration potential of undesirable compounds out of the adhesive layer and into the bonded material (or the packaged material itself). Therefore, the utilization of plasticizers for food contact materials is prohibited and substitutes like triacetine, approved as a food additive, are used instead. However, due to recycling, recycled paper and cardboard formerly not intended for the food packaging industry bring critical substrates, such as plasticizers out of the adhesive, or mineral oils out of printing inks, back into the paper and packaging market and potentially into contact with food. Thus, the formerly utilized plasticizer, di-isobutyl phthalate (DIBP), is already voluntarily banned in the European Union for all paper and converting adhesives, whether they are used for direct food contact or not. In order to decrease the risk via paper and cardboard recycling even further, there is therefore a need for a highly efficient plasticizer, which allows for a significant reduction of the amount of plasticizer used in the adhesive formulations compared to standard plasticizers.

Surprisingly, it has now been found that by using plasticizers containing an ester of a polyol and a linear or branched aliphatic monocarboxylic acid having 3 to 20 carbon atoms, for example, hexanoate ester plasticizers, it is possible to reduce the plasticizer level in polyvinyl ester packaging adhesives by at least 40% as compared to similar adhesives employing DIBP and benzoate plasticizers. At these reduced loadings, in standard adhesive formulations, the required performance is maintained at the same or improved levels.

### SUMMARY

In one aspect of the present invention, there is provided an adhesive composition comprising an aqueous dispersion of a polymer produced from a monomer composition comprising at least one vinyl ester of a carboxylic acid having up to 20 carbon atoms; and a plasticizer comprising an ester of a polyol and an aliphatic monocarboxylic acid having 3 to 20 carbon atoms. Further provided is use of the adhesive composition as a packaging adhesive.

In one embodiment, the polyol is selected from the group consisting of ethylene glycol, 1,2-propylene glycol, and oligomers thereof. The polyol may be selected from the group consisting of di-, tri-, and tetra-ethylene glycol, dipropylene glycol, tripropylene glycol, and tetraethylene glycol.

In one embodiment, the plasticizer comprises an ester of a polyol and an aliphatic carboxylic acid selected from the group consisting propionic acid, n-butyric acid, isobutyric acid, n-pentanoic acid, 2-methylbutyric acid, 3-methyl butyric acid, 2-methyl-pentanoic acid, n-hexanoic acid, 2-ethylbutyric acid, n-heptanoic acid, 2-methyl-hexanoic acid, cyclohexanecarboxylic acid, 2-ethylhexanoic acid, n-nonanoic acid, 2-methyloctanoic acid, isononanoic acid, 3,5,5-trimethyl hexanoic acid, 2-propyl heptanoic acid, 2-methylundecanoic acid, isoundecane carboxylic acid, tricyclodecanecarboxylic acid, and isotridecane carboxylic acid. The plasticizer may comprise an ester of a polyol and a substituted or unsubstituted hexanoic acid. The plasticizer may comprise one or more of triethylene glycol di-2-ethylhexanoate, tetraethylene glycol di-n-heptanoate, triethylene glycol di-2-ethyl butyrate, triethylene glycol di-n-heptanoate, and tetraethylene glycol di-2-ethylhexanoate.

In one embodiment, the adhesive composition comprises up to 10 % plasticizer by weight of the polymer, for example, 3 to 7 % plasticizer by weight of the polymer.

Generally, the polymer dispersion is produced by emulsion polymerization, typically in the presence of a stabilizer, for example, a polyvinyl alcohol stabilizer.

In one embodiment, the at least one vinyl ester is selected from the group consisting of vinyl formate, vinyl acetate, vinyl propionate, vinyl butyrate, vinyl isobutyrate, vinyl valerate, vinyl-2-ethyl-hexanoate, vinyl isooctanoate, vinyl nonate, vinyl decanoate, vinyl pivalate, vinyl versatate, and mixtures thereof. The polymer may comprise a vinyl ester copolymer, for example, a vinyl ester-ethylene copolymer, and more specifically, a vinyl acetate-ethylene copolymer, optionally together with one or more auxiliary co-monomers.

### DETAILED DESCRIPTION

An adhesive composition comprises an aqueous polymeric dispersion produced from a monomer composition comprising at least one vinyl ester of a carboxylic acid having up to 20 carbon atoms. The adhesive composition also includes a plasticizer comprising an ester of a polyol and an aliphatic carboxylic acid having 3 to 20 carbon atoms. Surprisingly, it has now been found that this plasticizer is more efficient than conventional DIBP and benzoate plasticizers in lowering the Tg, minimum film forming temperature and thickening ratio of the adhesive, while maintaining or improving other important properties of the adhesive such as setting speed, tensile strength, and elongation. As a result, by using the present plasticizer, it is possible to reduce the plasticizer level in polyvinyl ester packaging adhesives by at least 40% as compared to similar adhesives employing DIBP and benzoate plasticizers.

### Aqueous Polymer Dispersion

The aqueous polymeric dispersion used in the presently disclosed adhesive composition is produced, generally by emulsion polymerization, from a monomer composition comprising, as a main monomer, at least one vinyl ester of a mono- or di-carboxylic acid having up to 20 carbon atoms. Suitable vinyl esters include vinyl formate, vinyl acetate, vinyl propionate, vinyl butyrate, vinyl isobutyrate, vinyl valerate, vinyl-2-ethyl-hexanoate, vinyl isooctanoate, vinyl nonate, vinyl decanoate, vinyl pivalate, vinyl versatate, and mixtures thereof. In one embodiment, the vinyl ester comprises vinyl acetate.

In addition to vinyl esters, the monomer composition may comprise one or more additional main monomers selected from C₁-C₂₀-alkyl (meth)acrylates, vinyl-aromatic compounds having up to 20 carbons, ethylenically unsaturated nitriles, vinyl halides, vinyl ethers of C₁-C₁₀ alcohols, C₂-C₈ aliphatic hydrocarbons with 1 or 2 double bonds, and mixtures of these monomers.

Preferred alkyl (meth)acrylates are C₁-C₁₀-alkyl (meth)acrylates, such as methyl methacrylate, methyl acrylate, n-butyl acrylate, ethyl acrylate and 2-ethylhexyl acrylate. Mixtures of alkyl (meth)acrylates can also be employed.

Examples of suitable vinyl esters of C₁-C₂₀ carboxylic acids include vinyl acetate, vinyl propionate, vinyl laurate, vinyl stearate, vinyl benzoate, vinyl 2-ethyl hexanoate and Versatic acid vinyl esters, with vinyl acetate being particularly preferred.

Suitable vinyl-aromatic compounds include vinyltoluene, α- and p-methylstyrene, α-butylstyrene, 4-n-butylstyrene, 4-n-decyl-styrene and, preferably, styrene.

Examples of suitable nitriles include acrylonitrile and methacrylonitrile.

Suitable vinyl halides include chloro-, fluoro- or bromo-substituted ethylenically unsaturated compounds, such as vinyl chloride and vinylidene chloride.

Examples of vinyl ethers are vinyl methyl ether and vinyl iso-butyl ether, with preference being given to vinyl ethers of C₁-C₄ alcohols.

Examples of suitable C₂-C₈ aliphatic hydrocarbons with one olefinic double bond include ethene and propene, whereas representative examples of C₂-C₈ aliphatic hydrocarbons having two olefinic double bonds include butadiene, isoprene and chloroprene.

In one embodiment, the present polymer dispersion is produced from a mixture of main monomers comprising from 50 wt% to 99 wt% vinyl acetate and from 1 wt% to 40 wt% ethylene.

In addition to the main monomers discussed above, the aqueous polymerization mixture used to produce the present polymer dispersion may comprise up to 10 % auxiliary co-monomer(s) by weight based on the total weight of monomers in the mixture. Such auxiliary co-monomers can be those which promote better film or coating performance by the compositions herein or can provide films and coatings of desirable properties. Such desirable properties can include, for example, enhanced adhesion to surfaces or substrates, improved wet adhesion, and improved resistance to film or coating cracking. The optional co-monomers useful for incorporation into the emulsion copolymers of the compositions herein are those which contain at least one polymerizable double bond along with one or more additional functional moieties. Suitable auxiliary co-monomers include unsaturated organic acids, unsaturated silanes, glycidyl co-monomers, ureido co-monomers, co-monomers with crosslinkable functions, crosslinking co-monomers and combinations thereof.

Suitable auxiliary co-monomers including unsaturated organic acids comprise ethylenically unsaturated carboxylic acids and anhydrides and amides thereof, ethylenically unsaturated sulfonic acids and salts thereof, and ethylenically unsaturated phosphonic acids and salts thereof.

For example, the auxiliary co-monomer may comprise an ethylenically unsaturated C₃-C₈ monocarboxylic acid and/or an ethylenically unsaturated C₄-C₈ dicarboxylic acid, together with the anhydrides or amides thereof. Examples of suitable ethylenically unsaturated C₃-C₈ monocarboxylic acids include acrylic acid, methacrylic acid and crotonic acid. Examples of suitable ethylenically unsaturated C₄-C₈ dicarboxylic acids include maleic acid, fumaric acid, itaconic acid and citraconic acid.

Examples of suitable ethylenically unsaturated sulfonic acids include those having 2-8 carbon atoms, such as vinylsulfonic acid, 2-acrylamido-2-methylpropanesulfonic acid, 2-acryloyloxyethanesulfonic acid and 2-methacryloyloxyethanesulfonic acid, 2-acryloyloxy- and 3-methacryloyloxypropanesulfonic acid. Examples of suitable ethylenically unsaturated phosphonic acids also include those having 2-8 carbon atoms, such as vinylphosphonic acid and ethylenically unsaturated polyethoxyalkyletherphosphates.

In addition to or instead of said acids, it is also possible to use the salts thereof, preferably the alkali metal or ammonium salts thereof, particularly preferably the sodium salts thereof, such as, for example, the sodium salts of vinylsulfonic acid and of 2-acrylamidopropanesulfonic acid.

Unsaturated silanes usful as auxiliary co-monomers can generally correspond to the structural Formula I: 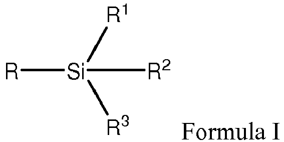 in which R denotes an organic radical olefinically unsaturated in the ω-position and R¹ R² and R³ which may be identical or different, denote the group -OZ, Z denoting hydrogen or primary or secondary alkyl or acyl radicals optionally substituted by alkoxy groups. Suitable unsaturated silane compounds of the Formula I are preferably those in which the radical R in the formula represents an ω-unsaturated alkenyl of 2 to 10 carbon atoms, particularly of 2 to 4 carbon atoms, or an ω-unsaturated carboxylic acid ester formed from unsaturated carboxylic acids of up to 4 carbon atoms and alcohols carrying the Si group of up to 6 carbon atoms. Suitable radicals R¹, R², R³ are preferably the group -OZ, Z representing primary and/or secondary alkyl radicals of up to 10 carbon atoms, preferably up to 4 carbon atoms, or alkyl radicals substituted by alkoxy groups, preferably of up to 3 carbon atoms, or acyl radicals of up to 6 carbon atoms, preferably of up to 3 carbon atoms, or hydrogen. Most preferred unsaturated silane co-monomers are vinyl trialkoxy silanes.

Examples of preferred silane compounds of the Formula I include γ-methacryloxypropyltris(2-methoxyethoxy)silane, vinyhnethoxysilane, vinyltriethoxysilane, vinyldiethoxysilanol, vinylethoxysilanediol, allyltriethoxysilane, vinyltripropoxysilane, vinyltriisopropoxysilane, vinyltributoxysilane, vinyltriacetoxysilane, trimethylglycolvinylsilane, γ-methacryloxypropyltrimethylglycolsilane, γ-acryloxypropyltriethoxysilane and γ-methacryloxypropyltrimethoxysilane.

Glycidyl compounds can also be used as optional auxiliary co-monomers to impart epoxy-functionality to the emulsion copolymer. Examples of suitable glycidyl optional co-monomers include glycidyl acrylate, glycidyl methacrylate, allyl glycidyl ether, and vinyl glycidyl ether.

Another type of optional co-monomer comprises cyclic ureido co-monomers. Cyclic ureido co-monomers are known to impart improved wet adhesion properties to films and coatings formed from copolymers containing these co-monomers. Cyclic ureido compounds and their use as wet adhesion promoting co-monomers are disclosed in U.S. Pat. Nos. 4,104,220; 4,111,877; 4,219,454; 4,319,032; 4,599,417 and 5,208,285. The disclosures of all of these U.S. patents are incorporated herein by reference in their entirety.

Another type of optional co-monomer comprises co-monomers with crosslinkable functions such as N-methylolacrylamide, N-methylolmethacrylamide, N-methylolallylcarbamate, N-methylolmaleimide, N-methylolmaleamic acid, and the N-methylol amides of aromatic vinyl carboxylic acids, such as N-methylol-p-vinylbenzamide. N-ethanol(meth)acrylamide, N-propanol(meth)acrylamide, the N-methylol esters or N-alkyl ethers or Mannich bases of N-methylol(meth)acrylamide or N-methylolallylcarbamate, acrylamidoglycolic acid and/or its salts, methyl acrylamidomethoxyacetate or N-(2,2-dimethoxy-1-hydroxyethyl)acrylamide.

A further group of co-monomers suitable for preparing the emulsion polymers used herein comprises crosslinking monomers, such as co-monomers with polyethylenic unsaturation, and hence with a crosslinking action. Examples include diallyl phthalate, diallyl maleate, triallyl cyanurate, tetraallyloxyethane, divinylbenzene, butane-1,4-diol dimethacrylate, triethylene glycol dimethacrylate, divinyl adipate, allyl (meth)acrylate, vinyl crotonate, methylenebisacrylamide, hexanediol diacrylate, pentaerythritol diacrylate and trimethylolpropane triacrylate.

### Stabilization System

Both during polymerization and thereafter, the polymer used to prepare the present adhesive composition is stabilized in the form of an aqueous dispersion or latex. The dispersion therefore will be prepared in the presence of and will contain a stabilization system (*i.e*., stabilizer) which generally comprises one or more emulsifiers, in particular nonionic emulsifiers and/or anionic emulsifiers, and/or one or more protective colloids. Mixtures of the different stabilizers can also be employed.

The amount of emulsifier employed will generally be at least 0.5 weight%, based on the total quantity of main co-monomers in the dispersion. Generally emulsifiers can be used in amounts up to about 8 weight%, based on the total quantity of main monomers in the dispersion. The weight ratio of nonionic to anionic emulsifiers may fluctuate within wide ranges, between 1:1 and 50:1 for example. Exemplary emulsifiers include nonionic emulsifiers having alkylene oxide groups and/or anionic emulsifiers having sulfate, sulfonate, phosphate and/or phosphonate groups. Such emulsifiers, if desired, can be used together with molecularly or dispersely water-soluble polymers, for example, together with polyvinyl alcohol. In one embodiment, also the emulsifiers used contain no alkylphenolethoxylates (APEO).

Examples of suitable nonionic emulsifiers include acyl, alkyl, oleyl, and alkylaryl ethoxylates. These products are commercially available, for example, under the name Genapol^{®}, Lutensol^{®} or Emulan^{®}. They include, for example, ethoxylated mono-, di-, and tri-alkylphenols (EO degree: 3 to 50, alkyl substituent radical: C₄ to C₁₂) and also ethoxylated fatty alcohols (EO degree: 3 to 80; alkyl radical: C₈ to C₃₆), especially C₁₀-C₁₄ fatty alcohol (3-40) ethoxylates, C₁₁-C₁₅ oxo-process alcohol (3-40) ethoxylates, C₁₆-C₁₈ fatty alcohol (11-80) ethoxylates, C₁₁ oxo-process alcohol (3-40) ethoxylates, C₁₃ oxo-process alcohol (3-40) ethoxylates, polyoxyethylenesorbitan monooleate with 20 ethylene oxide groups, copolymers of ethylene oxide and propylene oxide having a minimum ethylene oxide content of 10 weight%, the polyethylene oxide (4-40) ethers of oleyl alcohol, and the polyethene oxide (4-40) ethers of nonylphenol. Particularly suitable are the polyethylene oxide (4-40) ethers of fatty alcohols, more particularly of oleyl alcohol, stearyl alcohol or C₁₁ alkyl alcohols.

The amount of nonionic emulsifiers used in preparing the presently disclosed dispersions is typically about 1% to about 8 weight%, for example, about 1% to about 5 weight%, or about 1% to about 4 weight%, based on the total main monomer quantity. Mixtures of nonionic emulsifiers can also be employed.

Examples of suitable anionic emulsifiers include sodium, potassium, and ammonium salts of linear aliphatic carboxylic acids of chain length C₁₂-C₂₀, sodium hydroxyoctadecanesulfonate, sodium, potassium, and ammonium salts of hydroxy fatty acids of chain length C₁₂-C₂₀ and their sulfonation and/or sulfation and/or acetylation products, alkyl sulfates, including those in the form of triethanolamine salts, alkyl(C₁₀-C₂₀) sulfonates, alkyl(C₁₀-C₂₀) arylsulfonates, and their sulfonation products, lignosulfonic acid and its calcium, magnesium, sodium, and ammonium salts, resin acids, hydrogenated and dehydrogenated resin acids, and their alkali metal salts, dodecylated sodium diphenyl ether disulfonate, sodium lauryl sulfate, sulfated alkyl or aryl ethoxylate with EO degree between 1 and 10, for example ethoxylated sodium lauryl ether sulfate (EO degree 3) or a salt of a bisester, for example, of a bis-C₄-C₁₈ alkyl ester, of a sulfonated dicarboxylic acid having 4 to 8 carbon atoms, or a mixture of these salts, for example, sulfonated salts of esters of succinic acid, or salts, such as alkali metal salts, of bis-C₄-C₁₈ alkyl esters of sulfonated succinic acid, or phosphates of polyethoxylated alkanols or alkylphenols.

The amount of anionic emulsifiers used can typically range from about 0.1% to about 3.0 weight%, for example, from about 0.1% to about 2.0 weight%, or from about 0.5% to about 1.5 weight%, based on the total main monomer quantity. Mixtures of anionic emulsifiers can also be employed.

Along with, or instead of, emulsifiers, the presently disclosed aqueous dispersions can also comprise as part of the stabilizer system a selected type of protective colloid based on cellulose ethers, poly vinyl alcohol, poly vinyl pyrolidone, polyacrylic acid, maleic acid styrene copolymers or other water soluble polymers. Suitable protective colloids used in the presently disclosed dispersions include water-soluble or water-dispersible polymeric modified natural substances based on cellulose ethers. Such cellulose ethers have a viscosity, when tested as a 1 weight% aqueous in water at 25°C, of 5 to 5,000 mPas, for example, of 10 to about 1,500 mPas, or 10 to 500 mPas. Mixtures of celluloses ethers may be used to achieve these viscosity values. Examples of suitable cellulose ether materials include methyl cellulose, hydroxyethyl cellulose, hydroxypropyl cellulose, hydroxypropyl methyl cellulose, ethyl hydroxyethyl cellulose, methyl hydroxyethyl cellulose and combinations of these cellulose ethers. In one embodiment, hydroxyethyl cellulose, which is commercially available under the tradename Natrosol^{™}, is used.

Hydrophobically modified cellulose ethers may also be employed as the protective colloid in the presently disclosed dispersions. Such materials comprise cellulose ethers which have been hydrophobically modified with long chain hydrocarbon groups to reduce their water solubility. Hydrophobically modified cellulose ethers of this type are those described, for example, in U.S. Pat. Nos. 4,228,277; 4,352,916 and 4,684,704; all of which patents are incorporated herein by reference.

The protective colloids can be used individually or in combination. In the case of combinations, the two or more colloids can each differ in their molecular weights or they can differ in their molecular weights and in their chemical composition, such as the degree of hydrolysis, for example.

In one embodiment, the protective colloid is polyvinyl alcohol. Suitable polyvinyl alcohol has degrees of hydrolysis of from 60 to 100 mol % and viscosities of the 4% aqueous solutions at 20°C of 2-70 mPa*s, especially from 4 to 40 mPa*s.

When protective colloids are used, the amount thereof, based on the total amount of monomers used, is typically from 0.1 to 5 parts by weight, for example, from 0.3 to 5 parts by weight.

In addition to the emulsifiers and/or protective colloids that are used during the emulsion polymerization, it is also possible to add further emulsifiers, protective colloids and/or other stabilizers after the polymerization.

### Preparation of the Aqueous Polymer Dispersion

Many of the aqueous polymer dispersions employed in the present adhesive are commercially available but, where necessary, can be prepared using conventional emulsion polymerization procedures. Such procedures are described, for example, in U.S. Pat. No. 5,849,389, and in the Encyclopedia of Polymer Science and Engineering, Vol. 8, p. 659 (1987), the disclosures of both of these publications are incorporated herein by reference in their entirety.

The polymerization may be carried out in any manner known *per se* in one, two or more stages with different monomer combinations, giving polymer dispersions having particles with homogeneous or heterogeneous, e.g., core shell or hemispheres, morphology. Any reactor system such as batch, loop, continuous, cascade, etc, may be employed.

The polymerization temperature generally ranges from 20°C to 150°C, for example, from 50°C to 120°C. The polymerization generally takes place under pressure if appropriate, for example, from 2 to 150 bar, or from 5 to 100 bar.

The polymerization can be undertaken by batch, semi batch or continuous emulsions polymerization, i.e. by processes in which all the monomer is added upfront or by monomer slow add processes.

In a typical polymerization procedure involving, for example, aqueous copolymer dispersions, monomers, such as vinyl acetate, ethylene, and other monomers, can be polymerized in an aqueous medium under pressures up to 120 bar in the presence of one or more initiators, at least one emulsifying agent and a protective colloid component. The aqueous reaction mixture in the polymerization vessel can be maintained by a suitable buffering agent at a pH of about 2 to about 7.

The manner of combining the several polymerization ingredients, i.e. emulsifiers, monomers, initiators, protective colloids, etc., can vary widely. Generally an aqueous medium containing at least some of the emulsifier(s) can be initially formed in the polymerization vessel with the various other polymerization ingredients being added to the vessel thereafter.

Monomers can be added to the polymerization vessel continuously, incrementally or as a single charge addition of the entire amounts of co-monomers to be used. Co-monomers can be employed as pure monomers or can be used in the form of a pre-mixed emulsion. Ethylene as a co-monomer can be pumped into the polymerization vessel and maintained under appropriate pressure therein.

It is also possible to start the emulsion polymerization using a seed latex, for example with about 0.5 to about 15 weight% of the dispersion.

As noted, the polymerization of the ethylenically unsaturated monomers will generally take place in the presence of at least one initiator for the free-radical polymerization of these co-monomers. Suitable initiators for the free-radical polymerization, for initiating and continuing the polymerization during the preparation of the dispersions, include all known initiators which are capable of initiating a free-radical, aqueous polymerization in heterophase systems. These initiators may be peroxides, such as alkali metal and/or ammonium peroxodisulfates, organic hydroperoxides, more particularly water-soluble ones, or azo compounds, more particularly water-soluble azo compounds.

As polymerization initiators, it is also possible to use what are called redox initiators. Examples thereof are peroxodisulfates, tert-butyl hydroperoxide and/or hydrogen peroxide in combination with reducing agents, such as with sulfur compounds, an example being the sodium salt of hydroxymethanesulfinic acid, Bruggolite^{®} FF6 and FF7, Rongalit C, sodium sulfite, sodium disulfite, sodium thiosulfate, and acetone-bisulfite adduct, or with ascorbic acid, sodium erythobate, tartaric acid, or with reducing sugars.

The amount of the initiators or initiator combinations used in the process varies within what is usual for aqueous polymerizations in heterophase systems. In general the amount of initiator used will not exceed 5 weight%, based on the total amount of the co-monomers to be polymerized. The amount of initiators used, based on the total amount of the co-monomers to be polymerized, can be, for example, 0.05% to 2.0 weight%.

In this context, it is possible for the total amount of initiator to be included in the initial charge to the reactor at the beginning of the polymerization. In one embodiment, alternatively, a portion of the initiator is included in the initial charge, and the remainder is added after the polymerization has been initiated, in one or more steps or continuously. The addition may be made separately or together with other components, such as emulsifiers or monomer emulsions. The molecular weight of the various polymers in the presently disclosed dispersions can be adjusted by adding small amounts of one or more molecular weight regulator substances. These regulators, as they are known, are generally used in an amount of up to 2 weight%, based on the total co-monomers to be polymerized. As regulators, it is possible to use all of the substances known to the skilled artisan, for example, organic thio compounds, silanes, allyl alcohols, and aldehydes.

Following polymerization, the solids content of the resulting aqueous dispersions can be adjusted to the level desired by the addition of water or by the removal of water by distillation. Generally, the desired level of polymeric solids content after polymerization is from about 40 weight percent to about 70 weight percent based on the total weight of the polymer dispersion, for example, from about 45 weight percent to about 55 weight percent.

Where appropriate, the presently disclosed aqueous dispersions can also optionally comprise a wide variety of conventional additives, such as fillers, pigments, and auxiliaries including defoamers, surfactants, dispersants, biocides, rheology modifiers, freeze-thaw additives, formaldehyde scavenger like urea, complexing agents like EDTA or thickeners, which are typically used in the formulation of binders and/or adhesives. Such optional additives may be present in the dispersion from the beginning of or during polymerization or may be added to the dispersion post-polymerization.

### Plasticizer

In addition to the vinyl ester-based polymer dispersion described above, the present adhesive includes a plasticizer comprising an ester of a polyol and a linear or branched aliphatic monocarboxylic having 3 to 20 carbon atoms, for example, 5 to 10 carbon atoms. Suitable polyols can include, for example, compounds of the general formula:

H-(-O-[-CR¹R²-]ₘ-)ₒ-OH

wherein R¹ and R² are independently hydrogen, an alkyl radical having 1 to 5 carbon atoms, for example, methyl, ethyl or propyl, or a hydroxyalkyl radical having 1 to 5 carbon atoms, for example, hydroxy-methyl radical; m is an integer from 1 to 10, for example, 1 to 8 and in particular, 1, 2, 3 or 4; and o is an integer from 2 to 15, for example, 2 to 8 and in particular, 2, 3, 4 or 5.

In one embodiment, the presently disclosed ester of a polyol can comprise, for example, 1,3-propandiol, 1,3-butanediol, 1,4-butanediol, neopentyl glycol, 2,2-dimethylolbutan, trimethylol ethane, trimethylol propane, di-trimethylolpropane, trimethylol butane, 2,2,4-trimethylpentane-1,3-diol, 1,2-hexanediol, 1,6-hexanediol, pentaerythritol or dipentaerythritol or 3(4),8(9)-dihydroxy-methyl-tricyclo[5.2.1.0^{2.6}]decane.

In one embodiment, the polyol can include, for example, ethylene glycol, 1,2-propylene glycol and their oligomers, particularly the etherdiols, di-, tri-, and tetra-ethylene glycol or dipropylene glycol, tripropylene glycol or tetraethylene glycol.

Exemplary carboxylic acids include, for example, are propionic acid, n-butyric acid, isobutyric acid, n-pentanoic acid, 2-methylbutyric acid, 3-methyl butyric acid, 2-methyl-pentanoic acid, n-hexanoic acid, 2-ethylbutyric acid, n-heptanoic acid, 2-methyl-hexanoic acid, cyclohexanecarboxylic acid, 2-ethylhexanoic acid, n-nonanoic acid, 2-methyloctanoic acid, isononanoic acid, 3,5,5-trimethyl hexanoic acid, 2-propyl heptanoic acid, 2-methylundecanoic acid, isoundecane carboxylic acid, tricyclodecanecarboxylic acid and isotridecane carboxylic acid.

In one embodiment, the plasticizer comprises at least one of triethylene glycol di-2-ethylhexanoate, tetraethylene glycol di-n-heptanoate, triethylene glycol di-2-ethyl butyrate, triethylene glycol di-n-heptanoate and tetraethylene glycol di-2-ethylhexanoate.

In contrast to typical plasticizers employed in packaging applications (*e.g*., benzoate esters), which generally must be present in concentrations of at least 10 % by weight of vinyl ester polymer in order to achieve the right balance of flexibility, bond strength, and minimum film formation temperature required for use in packaging adhesives, the presently disclosed adhesive composition can comprise less than 10 %, for example 3 to 7 %, of the plasticizer by weight of the polymer.

### Adhesive Composition

In addition to the aqueous polymer dispersion and plasticizer described above, the adhesive composition can include one or more conventional adjuvants, for example, film-forming assistants, such as white spirit, Texanol^{®}, TxiB^{®}, butyl glycol, butyl diglycol, butyl dipropylene glycol, and butyl tripropylene glycol; wetting agents, such as AMP 90^{®}, TegoWet.280^{®}, Fluowet PE^{®}; defoamers, such as mineral oil defoamers or silicone defoamers; UV protectants, such as Tinuvin 1130^{®}; agents for adjusting the pH; preservatives; subsequently added stabilizing polymers, such as polyvinyl alcohol or additional cellulose ethers.

The presently disclosed adhesive composition is particularly useful as a packaging adhesive. The packaging adhesives market is one with ever evolving needs. Packaging adhesives can be used with paper, board, film & foil, envelopes, book making, folded boxes, cigarettes, etc. The presently disclosed adhesive composition can achieve good machining using a variety of application methods from rollers to nozzles for effective application on even difficult substrates.

The invention will now be more particularly described with reference to the following non-limiting Examples.

In the Examples, the thickening ratio (THR) is the ratio of the viscosities of the polyvinyl acetate-based dispersion employed in each test before and after the addition of plasticizer into the dispersion. To determine the THR, 180 g of the dispersion and 20 g of the plasticizer are mixed without stirring in a 250 mL beaker. After stirring for 30 minutes, the mixture and a blank sample of dispersion are stored for at least 24 h in a climatic chamber or box at a constant temperature of 23 °C and a humidity of 50%. Afterwards, the viscosity of each sample is measured with a Brookfield viscometer and the THR is calculated as the ratio between the viscosity of the mixture and that of the blank sample.

The rheology index (RHI) is measured using a Rheometer Physica Rheolab MC100 viscometer. After filling the test cylinder at 23°C with the adhesive, the shear rate is accelerated from 0 to 1000 s⁻¹ over a period of 1 minute, held at this shear rate for 5 minutes and then decelerated back to 0 s⁻¹ over a period of 1 minute. Viscosity measurements are taken at shear rates of 300 s⁻¹ and 1000 s⁻¹. The RHI is the ratio of the viscosity at 300 s⁻¹ and the viscosity at 1000 s⁻¹.

The Fipago setting speed test is a combination of a peel and a shear experiment. After fixing two GD-1 cardboards in the Fipago tester with the rough side on top, 100 µm wet film of adhesive is applied on a kraftpaper. After an open time of 10 seconds, the paper is laminated by a roller on the cardboard. After a predetermined close time, a pendulum holding both substrates together is released and the force necessary to separate the paper from the cardboard is measured. The experiment is repeated several times with varying closed times. At the end, the set speed is defined as the close time when the measured force exceeds 40 scale divisions on the tester.

Heat resistance of the adhesive is determined by applying 0.5 cm wide and 75 µm thick film of the adhesive to a first sheet of kraftpaper and then pressing a second sheet of kraftpaper onto the first sheet using a weight of 600 grams, afterwards allowing the adhesive to dry over night. On the next day, 3 samples are cut out of the bonded paper sheets in order to conduct parallel determinations. Both ends of each sample are fixed in brackets; one bracket is connected to a weight of 200 grams and the other is attached to the top of a column. The column is moved into a drying chamber. After a period of 30 minutes at an initial temperature of 30 °C without strain being applied to the adhesive bond, the column is moved upwards until the weight is 15-20 cm away from the bottom. After each additional 30 minutes, the temperature is raised by 5 °C until the weight falls causing the sheets to separate. The final temperature recorded before the weight falls is defined as the heat resistance temperature. The median of all three samples is the stated temperature.

Measurements of elongation and tensile strength are made according to DIN 53328 using a Zwick tensiometer. With an applicator frame, a 1000 µm thick, blister free, wet film of the adhesive is applied to a Hostaphan polyester foil. After drying the film, the foil is stored for at least 24 hours in a climate-controlled chamber. With a stamping machine, 10 bone-shaped test specimens are then cut from the foil and each is secured at its ends to two brackets, one of which is fixed and the other is movable away from the fixed bracket. The stretching force required to break each test specimen and the elongation at break are then measured with the tensiometer.

### Examples

A comparison of plasticizer WVC 3800 (a plasticizer composed mainly of di-2-ethylhexanoic acid triethylene glycol ester available from Celanese) and Benzoflex™ 2088 Plasticizer (available from Eastman) with polyvinyl acetate-based dispersions, specifically ^{®}Mowilith DHS S1 and ^{®}Mowilith LD 167 (both available from Celanese Emulsions) was performed. The following properties were identified using WVC 3800 in comparison to Benzoflex™ 2088:

a) Improved efficiency in lowering the T_{g} (glass transition temperature):

**Table 1**

| Wt% plasticizer in @Mowilith DHS S 1 | WVC 3800 T_{g} (°C) | Benzoflex™ 2088 T_{g} (°C) | Wt% plasticizer in @Mowilith LD 167 | WVC 3800 T_{g} (°C) | Benzoflex™ 2088 T_{g} (°C) |
|---|---|---|---|---|---|
| 0% | 41 | 41 | 0% | 42 | 42 |
| 1% | 28 | 39 | 1% | 38 | 39 |
| 3% | 28 | 34 | 3% | 31 | 35 |
| 5% | 22 | 28 | 5% | 22 | 29 |
| 7% | 20 | 22 | 7% | 15 | 25 |
| 10% | 18 | 18 | 10% | 8 | 22 |

b) Improved efficiency in lowering the MFFT (Minimum Film Formation Temperature):

**Table 2**

| Wt% plasticizer in ^{®}Mowilith DHS S 1 | WVC 3800 MFFT (°C) | Benzoflex™ 2088 MFFT (°C) | Wt% plasticizer in ^{®}Mowilith LD 167 | WVC 3800 MFFT (°C) | Benzoflex™ 2088 MFFT (°C) |
|---|---|---|---|---|---|
| 0% | 14 | 14 | 0% | 14 | 14 |
| 1% | 9 | 11 | 1% | 9 | 10 |
| 3% | 3 | 7 | 3% | 4 | 8 |
| 5% | 0 | 3 | 5% | 0 | 4 |
| 7% | 0 | 0 | 7% | 0 | 2 |
| 10% | 0 | 0 | 10% | 0 | 0 |

c) Improved efficiency in increasing the THR (Thickening Ratio):

**Table 3**

| Wt% plasticizer in ^{®}Mowilith DHS S 1 | WVC 3800 THR | Benzoflex™ 2088 THR | Wt% plasticizer in ^{®}Mowilith LD 167 | WVC 3800 THR | Benzoflex™ 2088 THR |
|---|---|---|---|---|---|
| 0% | 1 | 1 | 0% | 1 | 1 |
| 1% | 1.1 | 1.1 | 1% | 1.1 | 1 |
| 3% | 1.3 | 1.2 | 3% | 1.3 | 1.2 |
| 5% | 1.4 | 1.3 | 5% | 1.4 | 1.3 |
| 7% | 1.9 | 1.5 | 7% | 1.9 | 1.6 |
| 10% | 3 | 1.7 | 10% | 2.6 | 1.8 |

d) Similar rheology:

**Table 4**

| Wt% plasticizer in ^{®}Mowilith DHS S 1 | WVC 3800 RHI | Benzoflex™ 2088 RHI | Wt% plasticizer in ^{®}Mowilith LD 167 | WVC 3800 RHI | Benzoflex™ 2088 RHI |
|---|---|---|---|---|---|
| 0% | 6.4 | 6.4 | 0% | 0.9 | 0.9 |
| 1% | 6.3 | 6.2 | 1% | 1 | 0.9 |
| 3% | 6.5 | 6.1 | 3% | 0.9 | 0.9 |
| 5% | 6.6 | 6.1 | 5% | 0.9 | 0.9 |
| 7% | 6.3 | 6.3 | 7% | 0.8 | 0.9 |
| 10% | 6.1 | 6.1 | 10% | 1 | 0.9 |

e) Similar setting speed (FIPAGO) at 10,000 mPas:

**Table 5**

| Wt% plasticizer in ^{®}Mowilith DHS S 1 | WVC 3800 Setting speed (sec.) | Benzoflex™ 2088 Setting speed (sec.) | Wt% plasticizer in ^{®}Mowilith LD 167 | WVC 3800 Setting speed (sec.) | Benzoflex™ 2088 Setting speed (sec.) |
|---|---|---|---|---|---|
| 0% | 25 | 25 | 0% | 7 | 7 |
| 1% | 25 | 25 | 1% | 5 | 7 |
| 3% | 20 | 25 | 3% | 5 | 7 |
| 5% | 20 | 25 | 5% | 5 | 5 |
| 7% | 20 | 20 | 7% | 5 | 5 |
| 10% | 20 | 20 | 10% | 5 | 7 |

f) Slightly faster setting speed (FIPAGO) at 5,000 mPas:

**Table 6**

| Wt% plasticizer in ^{®}Mowilith DHS S 1 | WVC 3800 Setting speed (sec.) | Benzoflex™ 2088 Setting speed (sec.) | Wt% plasticizer in ^{®}Mowilith LD 167 | WVC 3800 Setting speed (sec.) | Benzoflex™ 2088 Setting speed (sec.) |
|---|---|---|---|---|---|
| 0% | 20 | 20 | 0% | 15 | 15 |
| 1% | 20 | 30 | 1% | 5 | 15 |
| 3% | 25 | 30 | 3% | 5 | 10 |
| 5% | 25 | 30 | 5% | 5 | 10 |
| 7% | 20 | 25 | 7% | 5 | 10 |
| 10% | 20 | 25 | 10% | 5 | 10 |

g) Film characteristics and heat resistance:

**Table 7**

| | ^{®}Mowilith LD 167 | ^{®}Mowilith LD 167 with 5% Benzoflex™ 2088 | ^{®}Mowilith LD 167 with 5% WVC 3800 | ^{®}Mowilith LD 167 with 10% Benzoflex™ 2088 | ^{®}Mowilith LD 167 with 10% WVC 3800 |
|---|---|---|---|---|---|
| Surface | smooth | smooth | smooth | smooth | smooth |
| Clarity | milky white | very slightly milky | very slightly milky | very slightly milky | very slightly milky |
| Hardness | hard, brittle | elastic | elastic | elastic | elastic |
| Surface tack | none | none | none | none | none |
| Re emulsifying | yes | yes | yes | yes | yes |
| Tensile strength (N/mm²) | 10 | 12 | 14 | 7 | 8 |
| Elongation (%) | 1.5 | 200 | 300 | 310 | 310 |
| Heat resistance (°C) | >100 | >100 | >100 | >100 | >100 |

As reflected in Tables 1-7, by using Plasticizer WVC 3800 as opposed to Benzoflex™ 2088 Plasticizer (*i.e*., the standard plasticizer in packaging not intended for food contact), a 40% reduction in plasticizer can be achieved, while lowering the T_{g} and MFFT. Furthermore, the elongation at a level of 5% is improved, as well as the tensile strength, while keeping the heat resistance and rheology the same. Thus, Plasticizer WVC 3800, which is classified as a SVOC (Super low Volatile Organic Compound), makes a universal and far more cost effective plasticizer for packaging not intended to come into contact with food. Furthermore, it decreases the risk of migration compounds in recycled paper and boards.

While various embodiments have been described, it is to be understood that variations and modifications may be resorted to as will be apparent to those skilled in the art. Such variations and modifications are to be considered within the purview and scope of the claims appended hereto.

## Claims

1. An adhesive composition comprising an aqueous dispersion of a polymer produced from a monomer composition comprising at least one vinyl ester of a carboxylic acid having up to 20 carbon atoms; and a plasticizer comprising an ester of a polyol and an aliphatic monocarboxylic acid having 3 to 20 carbon atoms.

2. The adhesive composition of claim 1, wherein the polyol is selected from the group consisting of ethylene glycol, 1,2-propylene glycol, and oligomers thereof.

3. The adhesive composition of claim 1 or claim 2, wherein the polyol is selected from the group consisting of di-, tri-, and tetra-ethylene glycol, dipropylene glycol, tripropylene glycol, and tetraethylene glycol.

4. The adhesive composition of any one of the preceding claims, wherein the plasticizer comprises an ester of a polyol and an aliphatic carboxylic acid selected from the group consisting propionic acid, n-butyric acid, isobutyric acid, n-pentanoic acid, 2-methylbutyric acid, 3-methyl butyric acid, 2-methyl-pentanoic acid, n-hexanoic acid, 2-ethylbutyric acid, n-heptanoic acid, 2-methyl-hexanoic acid, cyclohexanecarboxylic acid, 2-ethylhexanoic acid, n-nonanoic acid, 2-methyloctanoic acid, isononanoic acid, 3,5,5-trimethyl hexanoic acid, 2-propyl heptanoic acid, 2-methylundecanoic acid, isoundecane carboxylic acid, tricyclodecanecarboxylic acid, and isotridecane carboxylic acid.

5. The adhesive composition of any one of the preceding claims, wherein the plasticizer comprises an ester of a polyol and a substituted or unsubstituted hexanoic acid.

6. The adhesive composition of any one of the preceding claims, wherein the plasticizer comprises one or more of triethylene glycol di-2-ethylhexanoate, tetraethylene glycol di-n-heptanoate, triethylene glycol di-2-ethyl butyrate, triethylene glycol di-n-heptanoate, and tetraethylene glycol di-2-ethylhexanoate.

7. The adhesive composition of any one of the preceding claims, wherein the adhesive composition comprises up to 10 % plasticizer by weight of the polymer.

8. The adhesive composition of any one of the preceding claims, wherein the adhesive composition comprises 3 to 7 % plasticizer by weight of the polymer.

9. The adhesive composition of any one of the preceding claims, wherein the polymer dispersion is produced by emulsion polymerization.

10. The adhesive composition of any one of the preceding claims, wherein the polymer dispersion comprises a stabilizer.

11. The adhesive composition of any one of the preceding claims, wherein the polymer dispersion comprises a polyvinyl alcohol stabilizer.

12. The adhesive composition of any one of the preceding claims, wherein the at least one vinyl ester is selected from the group consisting of vinyl formate, vinyl acetate, vinyl propionate, vinyl butyrate, vinyl isobutyrate, vinyl valerate, vinyl-2-ethyl-hexanoate, vinyl isooctanoate, vinyl nonate, vinyl decanoate, vinyl pivalate, vinyl versatate, and mixtures thereof.

13. The adhesive composition of any one of the preceding claims, wherein the at least one vinyl ester comprises vinyl acetate.

14. The adhesive composition of any one of the preceding claims, wherein the monomer composition further comprises one or more co-monomers selected from C₁-C₂₀-alkyl (meth)acrylates, vinyl-aromatic compounds having up to 20 carbons, ethylenically unsaturated nitriles, vinyl halides, vinyl ethers of C₁-C₁₀ alcohols, and C₂-C₈ aliphatic hydrocarbons with 1 or 2 double bonds.

15. The adhesive composition of any one of the preceding claims, wherein the polymer comprises a vinyl ester-ethylene copolymer.

16. The adhesive composition of any one of the preceding claims, wherein the monomer composition further comprises one or more auxiliary co-monomers selected from unsaturated organic acids comprise ethylenically unsaturated carboxylic acids and anhydrides and amides thereof, ethylenically unsaturated sulfonic acids and salts thereof, and ethylenically unsaturated phosphonic acids and salts thereof.

17. Use of the adhesive composition of any one of the preceding claims as a packaging adhesive.
